# EUROPEAN PATENT APPLICATION

(11) **EP 4 566 840 A1**
(43) Date of publication of application: **11.06.2025**
(21) Application number: 24216059.6
(22) Date of filing: 28.11.2024
(51) Int. Cl.: B60C 1/00, C08L 7/00

(54) **RUBBER COMPOSITION FOR TIRE TREAD**

(30) Priority: 07.12.2023 US 202318532365
(71) Applicant: The Goodyear Tire & Rubber Company, Akron, OH 44316 (US)
(72) Inventor: NEUNLIST, Virginie Audrey, B-6720 Hachy (BE); WELTER, Carolin Anna, 54340 Schleich (DE); KAES, Christian, L-9184 Schrondweiler (LU); BALAGUER PINO, Adrian Osvaldo, L-2168 Luxembourg (LU)
(74) Representative: Kutsch, Bernd

(57) **Abstract**

A tire tread is formed from a vulcanizable rubber composition which includes, expressed by weight per hundred parts of elastomer (phr), 100 phr of an elastomer component, the elastomer component including a polyisoprene rubber and a polydiene rubber in a ratio by weight of at least 1:1, at least 40 phr of a filler component, the filler component comprising carbon black and silica in a ratio, by weight of at least 0.8:1, at least 1 phr of an organosilane coupling agent, at least 1 phr of a hydrocarbon resin, a sulfur-based curing agent, and a cure accelerator, the cure accelerator including an ultra-accelerator. The tire tread is suited for use on heavy vehicles, such as trucks and buses.

## Description

### FIELD

Described herein is a rubber composition suitable for forming a component of a pneumatic tire, such as a tire tread. The composition finds particular application in providing an on-the-road tire with improved rolling resistance while maintaining good tread wear characteristics.

### BACKGROUND

Rubber compositions suited to use in tires often include a mixture of elastomers, together with reinforcing fillers, such as carbon black and/or silica. For radial medium truck (RMT) tires e.g., for regional haul and urban applications, lower rolling resistance, contributing to low CO₂ emissions of the vehicles, is desirable. The tire tread is a significant contributor to the overall tire performance. The friction energy dissipated under deformation when rolling is determined, among other factors, by the material properties of the rubber composition used.

In order to reduce the rolling resistance, rubber compositions including various types of synthetic and natural rubber have traditionally been utilized in making tire treads. However, lower rolling resistance generally leads to a tradeoff in tread wear.

Rubber compositions have been developed for improving tread wear without a significant increase in rolling resistance. For example, U.S. Pub. No. 20170145195 A1 describes a vulcanizable rubber composition which includes a solution-polymerized styrene-butadiene rubber, polybutadiene, silica, a coumarone-indene resin, and a hydrocarbon resin derived from styrene and alpha-methylstyrene. U.S. Pub. No. 20210032442 A1 describes a tire tread rubber composition which includes a solution-polymerized styrene-butadiene rubber, a natural rubber or synthetic polyisoprene; cis-1,4 polybutadiene, a process oil, a hydrocarbon resin, and silica.

However, under wet conditions, such compositions do not tend to perform well. There remains a need for a rubber composition which improves wet traction while also reducing the rolling resistance.

### SUMMARY OF THE INVENTION

The invention relates to a rubber composition in accordance with claim 1, to tire tread in accordance with claim 13, to a tire in accordance with claim 14 and to a method in accordance with claim 15.

Dependent claims refer to preferred embodiments of the invention.

In accordance with a preferred embodiment, a tire tread is formed from a vulcanizable rubber composition including, expressed by weight per hundred parts of elastomer (phr), 100 phr of an elastomer component, the elastomer component comprising a polyisoprene rubber and a polydiene rubber in a ratio by weight of at least 1:1; at least 40 phr of a filler component, the filler component comprising carbon black and silica in a ratio, by weight of at least 0.8:1; at least 1 phr of an organosilane coupling agent; at least 1 phr of a hydrocarbon traction resin; a sulfur-based curing agent; and a cure accelerator, the cure accelerator comprising an ultra-accelerator.

In various aspects, separately or in combination:
The polyisoprene rubber may include natural rubber and the polydiene rubber may include a polybutadiene rubber. A ratio by weight of the natural rubber to the polybutadiene rubber may be at least 60:40, or at least 65:35, or up to 80:20, or up to 75:25, or up to 70:30. The polybutadiene rubber may have a cis-1,4 content of at least 95 %.

The ratio by weight of the carbon black to the silica may be at least 1:1, or at least 1.1:1, or at least 1.2:1, or up to 2:1, or up to 1.6:1, or up to 1.4:1. The rubber composition may include 15 to 45 phr or 30 to 40 phr of the carbon black and 20 to 40 phr or 24 to 35 phr of the silica.

The rubber composition may include at least 2 phr, or up to 7 phr, or up to 5 phr of the organosilane coupling agent.

The hydrocarbon resin may be selected from terpene-phenol resins, alpha-methylstyrene resins, aromatic modified aliphatic petroleum-based hydrocarbon resins, and combinations thereof. The rubber composition may include at least 1.5 phr, or up to 6 phr, or up to 4 phr of the hydrocarbon resin.

The rubber composition may include no more than 0.5 phr of liquid plasticizer.

The ultra-accelerator may include at least one of a thiuram, a dithiocarbamate, and a xanthate functionality. The ultra-accelerator may be selected from 1,6-bis(N,N'-dibenzylthiocarbamoyldithio)hexane, zinc dibenzyl dithiocarbamate, tetrabenzylthiuram disulfide, and combinations thereof. The rubber composition may include at least 0.1 phr, or at least 0.2 phr, or up to 1 phr, or up to 0.7 phr of the ultra-accelerator.

The accelerator may further include at least one of a benzothiazole, a sulfenamide, and a guanidine cure accelerator. The sulfenamide cure accelerator may include a benzothiazolesulfenamide cure accelerator.

The rubber composition may include, in total, at least 0.5 phr, or at least 0.8 phr, or up to 2 phr, or up to 1.5 phr of the at least one of the benzothiazole, sulfenamide, and guanidine cure accelerators.

A tire may include the tire tread of any of the aspects described above.

In accordance with another preferred embodiment, a method of forming a tire tread includes forming a rubber composition, including blending together 100 phr of an elastomer component, the elastomer component including natural rubber and a polybutadiene rubber, a ratio by weight of the natural rubber to polybutadiene rubber being at least 60:40; at least 40 phr of a filler component, the filler component including carbon black and silica, a ratio by weight of the carbon black to the silica being at least 1:1; at least 1 phr of an organosilane coupling agent; at least 1 phr of a hydrocarbon resin; a cure package comprising a sulfur-based curing agent, zinc oxide; optionally, one or more organic activators, and a cure accelerator, the cure accelerator including an ultra-accelerator. The method further includes curing the rubber composition to form the tire tread.

In accordance with another embodiment, a vulcanizable rubber composition includes, expressed by weight per hundred parts of elastomer (phr), 100 phr of an elastomer component, the elastomer component comprising natural rubber and a polybutadiene rubber in a ratio by weight of at least 60:40; at least 40 phr of a filler component, the filler component including carbon black and silica in a ratio by weight of from 1:1 to 2:1; 1 to 7 phr of an organosilane coupling agent; 1 to 6 phr of a hydrocarbon resin; 0.5 to 3 phr of a wax; and a cure package comprising a sulfur-based curing agent, zinc oxide; an organic activator, and a cure accelerator, the cure accelerator comprising 0.1 to 1.0 of an ultra-accelerator and 0.5 to 2 phr of a sulfenamide cure accelerator.

A tire tread may be formed from the vulcanizable rubber composition.

### DETAILED DESCRIPTION OF PREFERRED EMBODIMENTS

A rubber composition is described herein which is particularly suited to use in a tread of a radial medium truck (RMT) tire, particularly for high mileage applications, such as tires used in urban buses and regional and long-haul delivery trucks. The rubber composition provides improvements in tire wear, rolling resistance, and tear properties. The rubber composition benefits from the use of a curative system that yields lower crosslink density and shorter crosslinks.

The curative system includes an ultra-accelerator, which serves as an anti-reversion agent. This helps to limit aging and heat build-up in the tires. The ultra-accelerator is dispersed in a polymer matrix of high natural rubber content, silica and carbon black fillers, and a resin. The combination of an ultra-accelerator with a resin yields improvements in tread wear and rolling resistance, while also providing wet traction.

The ultra-accelerator tends to undergo an additional reaction forming stable monosulfide crosslinks, beyond the crosslinks formed with sulfenamide systems (in conventional vulcanization (CV) and efficiency vulcanization (EV) systems). This reduces the need for other compounding techniques, such as increasing sulfur levels to reach a required cure state, which can make the rubber composition more susceptible to age hardening. The combination of an ultra-accelerator with a resin and low sulfur content provides unique properties, in particular, a combination of low rolling resistance with improvements in wear as demonstrated by ageing and resistance to chipping.

### Definitions

The terms "rubber" and "elastomer" may be used interchangeably, unless otherwise indicated. The terms "rubber composition" or "compounded rubber" are used interchangeably to refer to "rubber which has been blended or mixed with various ingredients and materials" and such terms are well known to those having skill in the rubber mixing or rubber compounding art. The terms "cure" and "vulcanize" may be used interchangeably unless otherwise indicated.

As used herein, the term "tread," refers to both the portion of a tire that comes into contact with the road under normal inflation and load and optionally also any subtread, unless otherwise indicated.

As used herein, the term "phr" means parts per one hundred parts rubber by weight. In general, using this convention, a rubber composition includes 100 parts by weight of rubber/elastomer. The claimed composition may include other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. The term "phf" means parts per one hundred parts by weight of fillers in the rubber composition.

Unless otherwise noted, the following methods are used for determining properties:
Molecular weights of elastomers, rubber compositions, and resins, such as M ₙ (number average molecular weight), M_{w} (weight average molecular weight) and M_{z} (z average molecular weight), are determined herein using gel permeation chromatography (GPC) according to ASTM D5296-19, "Standard Test Method for Molecular Weight Averages and Molecular Weight Distribution of Polystyrene by High Performance Size-Exclusion Chromatography," using polystyrene calibration standards.

The glass transition temperature (Tg) of an elastomer or elastomer composition is the glass transition temperature(s) of the respective elastomer or elastomer composition in its uncured state or possibly a cured state in a case of an elastomer composition

Tg values of elastomers are determined as a peak midpoint by a differential scanning calorimeter (DSC) at a temperature rate of increase of 10° C per minute, according to ASTM D3418-21, "Standard Test Method for Transition Temperatures and Enthalpies of Fusion and Crystallization of Polymers by Differential Scanning Calorimetry," hereinafter ASTM D3418.

The glass transition temperature Tg for a resin is determined as a peak midpoint by a differential scanning calorimeter (DSC) at a temperature rate of increase of 10° C per minute, according to ASTM D6604-00 (2017), "Standard Practice for Glass Transition Temperatures of Hydrocarbon Resins by Differential Scanning Calorimetry," hereinafter ASTM D6604.

The glass transition temperature Tg for an oil is determined as a peak midpoint by a differential scanning calorimeter (DSC) at a temperature rate of increase of 10°C per minute, according to ASTM E1356-08 (2014), "Standard Test Method for Assignment of the Glass Transition Temperatures by Differential Scanning Calorimeter."

The softening point of a resin is determined according to ASTM E28-18, "Standard Test Methods for Softening Point of Resins Derived from Pine Chemicals and Hydrocarbons, by Ring- and-Ball Apparatus," hereinafter, ASTM E28, which is sometimes referred to as a ring and ball softening point.

Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)," hereinafter, ASTM D1646.

The term "alkyl" refers to linear, branched and cycloalkyl groups. The term "aryl" refers to groups including at least one aromatic ring and encompasses alkylaryl groups.

Cis, trans, and vinyl contents (%) of polymers refer to the molar proportions of the 1,4-cis, 1-4-trans, and 1-2-vinyl butadiene units of the polymer, unless otherwise expressed, and generally total 100%. These percentages can be determined by 1H-NMR spectrometry, according to ISO 21561-1:2015. Styrene content refers to the wt.% of bound styrene in a polymer, such as a styrene-butadiene polymer, and can be determined by FT-IR.

### The Rubber Composition

An exemplary tire tread is formed from a vulcanizable rubber composition including, expressed by weight per hundred parts of elastomer (phr):
1) 100 phr of an elastomer component, the elastomer component including:
   a) polyisoprene rubber, such as natural rubber (NR); and
   b) optionally, a polydiene rubber, such as polybutadiene (PBD);
2) at least 40 phr of a filler component including:
   a) carbon black; and
   b) silica;
3) optionally, at least 1 phr of an organosilane coupling agent;
4) at least 1 phr of a hydrocarbon traction resin;
5) optionally, one or more processing aids, selected from:
   a) a liquid plasticizer, such as an oil,
   b) a wax,
   and mixtures thereof;
6) a cure package including:
   a) a sulfur-based curing agent;
   b) one or more activators, selected from (i) zinc oxide and (ii) one or more organic activators, such as fatty acids, alkaline earth metal salts of fatty acids, and combinations thereof;
   c) a cure accelerator, including an ultra-accelerator; and
   d) optionally, a cure retardant; and
7) optionally, additional rubber compounding materials, such as antioxidants, antiozonants, and antidegradants.

Examples of these components are described below.

### Elastomers

One or more vulcanizable elastomers may be used in the rubber composition. These elastomers may be derived from monomers which include at least one double bond, e.g., a C=C bond, or at least two double bonds, such as diene-based elastomers.

In one embodiment, the elastomers include a polyisoprene rubber, such as natural rubber (NR), and optionally a polydiene rubber, such as polybutadiene rubber (PBD). The natural rubber may be the major component in the elastomers, e.g., more than the other elastomers combined, and in some embodiments may be the only elastomer.

In one embodiment, PBD and NR are the only elastomers used in the rubber composition, or together account for at least 95 phr or at least 98 phr of the elastomers.

A ratio, by weight, of natural rubber to polybutadiene rubber may be from 60:40 to 100:0, or at least 65:35, or up to 80:20, or up to 75:25, or up to 70:30.

### Polyisoprene Rubber, e.g., Natural Rubber

Synthetic polyisoprene refers to a polymer that is manufactured from isoprene monomers, and should not be construed as including naturally occurring rubber. However, the term polyisoprene should be construed as including polyisoprenes manufactured from natural sources of isoprene monomer.

As used herein, the term "natural rubber" means naturally occurring rubber such as can be harvested from sources such as Hevea rubber trees and non-Hevea sources (e.g., guayule shrubs and dandelions such as TKS). In other words, the term "natural rubber" should be construed so as to exclude synthetic polyisoprene. Natural rubber is primarily cis-polyisoprene. The cis-1,4-polyisoprene content of the natural rubber may be at least 90 %, or at least 95%. In one embodiment, the natural rubber is a natural cis-1,4-polyisoprene rubber having a cis-1,4-content of at least 96 % and a Tg of -60°C to -110°C, e.g., about -65°C, as determined according to ASTM D3418.

Several forms of natural rubber are commercially available. The natural rubber may meet the ISO TSR 20 Grade specification or the ISO TSR 10 Grade specification for purity. An ISO TSR 20 natural rubber has a maximum ash content of 1 wt. %, as determined according to ISO 247:1990, a maximum volatile matter of 0.8 wt. %, as determined according to ISO 248:1991, a maximum nitrogen content of 0.6 wt. %, as determined according to ISO 1656:1996, a minimum initial Wallace plasticity of 30, as determined according to ISO 2007:1991, and a minimum plasticity retention index of 40, as determined according to ISO 2930:1995. For TSR 10, a maximum ash of 0.75 wt. %, a maximum nitrogen of 0.6 wt. %, a maximum volatiles of 0.8 wt. %, a minimum plasticity of 30, and a minimum plasticity retention of 50 are specified. In other embodiments, the natural rubber may be a ribbed smoked sheet (RSS) rubber.

The polyisoprene rubber, e.g., natural rubber, may be used in the rubber composition in an amount of at least 60 phr, or at least 65 phr, or up to 100 phr, or up to 90 phr, or up to 85 phr, or up to 80 phr, or up to 75 phr, such as 70±5 phr.

### The Polydiene Rubber

The rubber composition may include a synthetic conjugated diene-based elastomer (referred to herein as a polydiene or polydiene elastomer). The polydiene elastomer includes at least one polydiene elastomer, each of the polydiene elastomers being derived, at least in part, from butadiene. For example, at least 20%, or at least 30% of the units in the polydiene rubber(s) are formed from butadiene. In one embodiment, the polydiene rubber includes a polybutadiene rubber, i.e., a synthetic polybutadiene which is the homopolymerization product of a single monomer: butadiene. In particular, a cis-1,4-polybutadiene rubber may be used. In another embodiment, the polydiene rubber is a copolymer of butadiene and another monomer, such as a vinylarene monomer, e.g., one or more of styrene, α-methylstyrene, divinyl benzene, and vinylpyridine, such as styrene-butadiene rubber (SBR).

Suitable polybutadiene rubbers may be prepared, for example, by organic solution polymerization of 1,3-butadiene. The PBD may be conveniently characterized, for example, by having at least a 90 % cis-1,4-microstructure content ("high cis" content), or at least 95 %, or at least 96 %. The glass transition temperature (Tg), determined according to ASTM D3418, of the PBD may range from -95 to -112 °C. The PBD may have a Mooney viscosity, determined according to ASTM D1646, of 43-65 M.U.

Suitable polybutadiene rubbers are available commercially, such as Budene^{®} 1207, Budene^{®} 1208, Budene^{®} 1223, and Budene^{®} 1280 from The Goodyear Tire & Rubber Company and BUNA^{®} CB 25 from Arlanxeo. These high cis-1,4-polybutadiene rubbers can be synthesized utilizing nickel or neodymium catalyst systems, such as those which include a mixture of (1) an organonickel compound, (2) an organoaluminum compound, and (3) a fluorine containing compound, as described, for example, in U.S. Pat. Nos. 5,698,643 A and 5,451,646 A. For example, Budene^{®} 1207, which is nickel catalyzed, has a cis 1,4-content of at least 96 %, a Mooney viscosity of 55, and a Tg of -100 °C to -104 °C, and Budene^{®} 1223, which is neodymium catalyzed, has a cis 1,4-content of at least 96 %, a Mooney viscosity of 55, and a Tg of about - 104 °C.

The PBD may be used in the rubber composition in an amount of at least 10 phr, or at least 15 phr, or at least 20 phr or up to 40 phr, or up to 35 phr, such as 30±5 phr. In other embodiments, PBD is omitted (and/or may be at least partially replaced with an SBR).

The styrene-butadiene rubber, where used, may be an emulsion-polymerized styrene-butadiene rubber (ESBR) and/or a solution polymerized styrene-butadiene rubber (SSBR). Exemplary ESBRs may have a bound styrene content of from 5 to 50 wt. %, such as 20 to 30 wt. %. In emulsion polymerization, styrene and 1,3-butadiene are copolymerized as an aqueous emulsion. Emulsion polymerization methods are described, for example, in U.S. Pat. No. 5,583,173 A, and U.S. Pub. Nos. 20050288393 A1, 20060266454 A1, 20080216935 A1, and 20140171557 A1. Exemplary SSBRs may have a bound styrene content of from 5 to 50 wt. %, e.g., 9 to 36, wt. %, or 26 to 31 wt. %. One ESBR is commercially available as KER^{®}1789 from Synthos Dwory.

SSBRs can be prepared, for example, by anionic polymerization in an inert organic solvent. For example, the SSBR can be synthesized by copolymerizing styrene and 1,3-butadiene monomer in a hydrocarbon solvent utilizing an organo lithium compound as the initiator. Alternatively, the SSBR is tin-coupled. Methods of preparing SSBRs are described, for example, in U.S. Pat. Nos. 4,843,120; 5,239,009; and 6,559,240; and U.S. Pub. No. 20120077902 A1.

In one embodiment, one or more of the elastomers used in the rubber composition may be hydrogenated and/or functionalized. Hydrogenation reduces the percentage of double bonds in the elastomer. Hydrogenation of the polydiene elastomer may be partial or complete. By partial, it is meant that fewer than all of the double bonds present in the polydiene segment(s) of the elastomer are hydrogenated, e.g., with a hydrogenation catalyst. For example, at least 10% or at least 20%, or at least 30%, or at least 40%, or at least 60%, or at least 80% of the double bonds present in the polydiene segment(s) of the elastomer become saturated by the hydrogenation. In some embodiments, up to 100% of the double bonds present in the polydiene segment(s) of the elastomer become saturated by the hydrogenation.

Various functional groups can be incorporated by functionalization, such as alkoxysilane groups, primary amine groups, thiol groups, and combinations thereof. For example, a functionalized SBR may be obtained by copolymerizing styrene and butadiene with a primary amino group and/or thiol group and an alkoxysilyl group which are bonded to the polymer chain. In one embodiment, the alkoxysilyl group is an ethoxysilyl group. For example, the styrene-butadiene rubber is produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure.

Methods of preparing functionalized styrene-butadiene rubbers are disclosed, for example, in U.S. Pub. Nos. 20040249020 A1; 20040254301 A1; 20080287601 A1; and 20140135437 A1. Chain functionalized amino-functionalized SBRs are described, for example, in U.S. Pub. No. 20040122194 A1.

### Other Elastomers

Other vulcanizable elastomers may be present in minor amounts (e.g., totaling up to 10 phr, or up to 5 phr, or up to 2 phr). Examples of such other elastomers include halobutyl rubber, e.g., bromobutyl rubber and chlorobutyl rubber, nitrile rubber, polynorbornene copolymer, ethylene-propylene-diene rubber, chloroprene rubber, acrylate rubber, fluorine rubber, silicone rubber, polysulfide rubber, epichlorohydrin rubber, butyl rubber, a terpolymer formed from ethylene monomers, propylene monomers, and/or ethylene propylene diene monomer (EPDM), isoprene-based block copolymers, styrenic block copolymers, styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate. Such polymers optionally include a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer.

### Fillers

The rubber composition may include, in total, at least 40 phr, or at least 45 phr or at least 50 phr, or up to 80 phr, or up to 70 phr, or up to 65 phr or up to 60 phr of one or more particulate reinforcing fillers.

In one embodiment, only two reinforcing fillers are used in the rubber composition: carbon black (CB) and silica. In other embodiments, additional fillers may be employed.

A ratio by weight of carbon black to silica may be at least 0.8:1, or at least 1:1, or at least 1.1:1, or at least 1.2:1, e.g., up to 2:1, or up to 1.8:1, or up to 1.6:1, or up to 1.4:1.

### Silica

The term "silica" is used herein to refer to silicon dioxide, SiO₂ (which may contain minor amounts of impurities, generally less than 1 wt. %, resulting from the process in which the silica is formed). The silica may be a precipitated silica which is formed by digesting amorphous silica with sodium hydroxide to form sodium silicate and precipitating silica from sodium silicate by reaction with an acidifying agent, such as sulfuric acid or carbon dioxide. The resulting precipitate is washed and filtered. Other methods of preparing particulate silica are described, for example, in U.S. Pat. Nos. 5,587,416 A, 5,708,069 A, 5,789,514 A, 5,800,608 A, and 5,882,617 A; and U.S. Pub. Nos. 20020081247 A1; 20050032965 A1; and 20110178227 A1.

The silica may be present in the rubber composition in an amount of at least 15 phr, or at least 20 phr, or at least 25 phr, or up to 35 phr, or up to 30 phr. Expressed in terms of the total filler, silica may be present in the rubber composition in an amount of at least 30 phf, or at least 45 phf, or up to 75 phf, or up to 60 phf, or up to 55 phf, or up to 50 phf, or up to 48 phf.

The silica may have a CTAB specific surface area of at least 120 m²/g, or at least 140 m²/g, or up to 400 m²/g, or up to 300 m²/g. CTAB surface area is measured according to ASTM D6845-20, "Standard Test Method for Silica, Precipitated, Hydrated-CTAB (Cetyltrimethylammonium Bromide) Surface Area." This test method covers the measurement of the specific surface area of precipitated silica, exclusive of area contained in micropores too small to admit hexadecyltrimethylammonium bromide (cetyltrimethylammonium bromide, commonly referred to as CTAB) molecules.

The surface area of silica can also be measured through nitrogen adsorption in accordance with ASTM D1993-18, "Standard Test Method for Precipitated Silica-Surface Area by Multipoint BET Nitrogen Adsorption," which is referred to herein as nitrogen surface area. The nitrogen surface area can be slightly higher than the CTAB surface area.

Exemplary precipitated silicas which may be used include Hi-Sil^{™} 532, Hi-Sil^{™} 532 EP, and Hi-Sil^{™} EZ 160G from PPG Industries; Hubersil^{™} 4155 from the J. M. Huber Company; Zeosil^{™}, under the designations 115GR, 125GR, 165GR, 175GR, 185GR, 195GR, 1085GR, 1165MP, 1115MP, HRS 1200MP, Premium MP, Premium 200MP, Premium SW, and 195HR from Solvay; Ultrasil^{™}, under the designations VN2, VN3, VN3GR, 5000GR, 7000GR, 9000GR from Evonik; Zeopol^{™}, under the designations 8755LS and 8745 from Evonik; Newsil^{™}, under the designations 115GR and 2000MP, from Wuxi Quechen Silicon Chemical Co., Ltd; and Tokusil^{™} 315 from Maruo Calcium Co., Ltd.

### Carbon Black

The carbon black may be present in the rubber composition in an amount of at least 10 phr, or at least 20 phr, or at least 25 phr, or at least 30 phr, or up to 50 phr, or up to 45 phr, or up to 40 phr. Expressed in terms of the total filler, carbon black may be present in the rubber composition in an amount of at least 10 phf, or at least 25 phf, or at least 40 phf, or at least 50 phf, or up to 70 phf, or up to 60 phf, or up to 55 phf, or up to 50 phf, or up to 48 phf.

The carbon black may have a specific surface area of at least 8, or at least 20, or at least 100, or at least 120, or up to 132 m²/kg, as determined according to ASTM D6556-21, "Standard Test Method for Carbon Black-Total and External Surface Area by Nitrogen Adsorption." The specific (external) surface area, which is based on the statistical thickness method (STSA), is defined as the specific surface area that is accessible to rubber.

Exemplary carbon blacks useful herein include those with ASTM designations N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991, as specified by ASTM D1765-21, "Standard Classification System for Carbon Blacks Used in Rubber Products." These carbon blacks have iodine absorptions, as determined according to ASTM D1510-21, ranging from 9 to 145 g/kg and a DBP absorption number, as determined according to ASTM D2414, ranging from 34 to 150 cm³/100 g. For example, N121 grade is a granular carbon black with an Iodine Absorption of about 121 g/kg, a CATB specific surface area of about 121 m²/kg, a DBP absorption of about 132 m²/kg, and an ash content of less than 0.5 wt. %. N220 grade is a granular carbon black with an Iodine Absorption of 116-126 g/kg, a CATB specific surface area of 106-116 m²/kg, a DBP absorption of 109-119 m²/kg, and an ash content of less than 0.5 wt. %.

### Other Fillers

Reinforcing fillers, other than the silica and carbon black, may be utilized, e.g., in amounts of up to 30 phr, or up to 20 phr, or up to 10 phr, or up to 1 phr, or may be absent. Examples of such additional reinforcing fillers include alumina, aluminum hydroxide, clay (reinforcing grades), magnesium hydroxide, boron nitride, aluminum nitride, titanium dioxide, reinforcing zinc oxide, and combinations thereof.

In some embodiments, one or more non-reinforcing fillers may be used in the rubber composition. Examples of such fillers include clay (non-reinforcing grades), graphite, magnesium dioxide, starch, boron nitride (non-reinforcing grades), silicon nitride, aluminum nitride (non-reinforcing grades), calcium silicate, silicon carbide, ground rubber, and combinations thereof. The term "non-reinforcing filler" is used to refer to a particulate material that has a nitrogen absorption specific surface area (N2SA), as determined according to ASTM D6556-21, of 20 m²/g, or less, e.g., 10 m²/g or less. In certain embodiments, non-reinforcing fillers may be particulate material that has a particle size of greater than 1000 nm.

A total amount of non-reinforcing filler may be 0 to 10 phr, or up to 5 phr, or up to 1 phr.

In one embodiment, components of the rubber composition other than the polybutadiene, natural rubber, carbon black, and silica (such as other elastomers, other reinforcing fillers, non-reinforcing fillers, organosilane coupling aids, resins, processing aids, antioxidants, antiozonants, antidegradants, and the cure package) are present at no more than 40 phr of the rubber composition, or no more than 30 phr, or no more than 25 phr of the rubber composition.

### Organosilane Coupling Agent

The organosilane coupling agent helps to make the silica more hydrophobic, which aids in dispersion of the silica in the elastomer and in forming covalent bonds between the elastomer and the silica.

The amount of organosilane coupling agent may be based on the amount of silica in the composition, such as from 2 to 15 parts per hundred parts of silica.

The organosilane coupling agent may be at least 1 phr, or at least 2 phr, or at least 3 phr, or up to 10 phr, or up to 7 phr, or up to 5 phr.

Examples of organosilane coupling agents include those containing groups such as alkyl alkoxy, mercapto, blocked mercapto, sulfide-containing (e.g., monosulfide-based alkoxy-containing, disulfide-based alkoxy-containing, tetrasulfide-based alkoxy-containing), amino, vinyl, epoxy, and combinations thereof.

In one embodiment, the organosilane coupling agent is an alkyl alkoxysilane having the general formula (R¹)ₚSi(OR²)₄₋ₚ where each R² is independently a monovalent organic group, p is an integer from 1 to 3, e.g., 1, and at least one R¹ is an alkyl group. Each R¹ independently may be a C₁ to C₂₀ aliphatic (or C₆ to C₁₅ aliphatic, or C₈ to C₁₄ aliphatic), C₅ to C₂₀ cycloaliphatic, or C₆ to C₂₀ aromatic group. Each R² independently may be a C₁ to C₆ aliphatic group.

Exemplary mercapto silanes have the general formula HS-R³-Si(R⁴)(R⁵)₂, where R³ is a divalent organic group, R⁴ is a halogen atom or an alkoxy group, and each R⁵ is independently a halogen, an alkoxy group or a monovalent organic group. The halogen is chlorine, bromine, fluorine, or iodine. The alkoxy group may have 1-3 carbon atoms.

Exemplary blocked mercapto silanes have the general formula B-S-R⁶-Si-X₃ with an available silyl group for reaction with silica in a silica-silane reaction and a blocking group B that replaces the mercapto hydrogen atom to block the reaction of the sulfur atom with the polymer. In the foregoing general formula, B is a block group which can be in the form of an unsaturated heteroatom or carbon bound directly to sulfur via a single bond, R⁶ is C₁ to C₆ linear or branched alkylidene and each X is independently selected from the group consisting of C ₁ to C₄ alkyl and C₁ to C₄ alkoxy.

Examples of alkyl alkoxysilanes suitable for use include octyltriethoxysilane, octyltrimethoxysilane, trimethylethoxysilane, cyclohexyltriethoxysilane, isobutyl triethoxy-silane, ethyltrimethoxysilane, cyclohexyl-tributoxysilane, dimethyldiethoxysilane, methyltriethoxysilane, propyltriethoxysilane, hexyltriethoxysilane, heptyltriethoxysilane, nonyltriethoxysilane, decyltriethoxysilane, dodecyltriethoxysilane, tetradecyltriethoxysilane, octadecyltriethoxysilane, methyloctyldiethoxysilane, dimethyldimethoxysilane, methyltrimethoxysilane, propyltrimethoxysilane, hexyltrimethoxysilane, heptyltrimethoxysilane, nonyltrimethoxysilane, decyltrimethoxysilane, dodecyltrimethoxysilane, tetradecyltrimethoxysilane, octadecyl-trimethoxysilane, methyloctyl dimethoxysilane, and mixtures thereof.

Examples of bis(trialkoxysilylorgano)polysulfides suitable for use include bis(trialkoxysilylorgano) disulfides and bis(trialkoxysilylorgano)tetrasulfides.

Examples of bis(trialkoxysilylorgano)disulfides include 3,3'-bis(triethoxysilylpropyl) disulfide, 3,3'-bis(trimethoxysilylpropyl)disulfide, 3,3'-bis(tributoxysilylpropyl)disulfide, 3,3'-bis(tri-t-butoxysilylpropyl)disulfide, 3,3'-bis(trihexoxysilylpropyl)disulfide, 2,2'-bis(dimethyl-methoxysilylethyl)disulfide, 3,3'-bis(diphenylcyclohexoxysilylpropyl)disulfide, 3,3'-bis(ethyl-di-sec-butoxysilylpropyl)disulfide, 3,3'-bis(propyldiethoxysilylpropyl)disulfide, 12,12'-bis(triisopropoxysilylpropyl)disulfide, 3,3'-bis(dimethoxyphenylsilyl-2-methylpropyl)disulfide, and mixtures thereof.

Examples of bis(trialkoxysilylorgano)tetrasulfide silica coupling agents include bis(3-triethoxysilylpropyl)tetrasulfide, bis(2-triethoxysilylethyl)tetrasulfide, bis(3-trimethoxysilylpropyl)tetrasulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropylbenzothiazole tetrasulfide, and mixtures thereof.

Exemplary bis-(3-triethoxysilylpropyl) polysulfides may have an average of from 2 to 2.6 or from 3.5 to 4, connecting sulfur atoms in the polysulfidic bridge. Examples include bis(3-triethoxysilylpropyl)tetrasulfide (TESPT), available as Si69^{®} from Evonik Corporation and bis-(3-triethoxysilylpropyl)disulfide with an average of 2.15 connecting sulfur atoms in the polysulfidic bridge, available as Si266^{®} from Evonik Corporation.

Examples of mercapto silanes suitable for use include 1-mercaptomethyltriethoxysilane, 2-mercaptoethyltriethoxysilane, 3-mercaptopropyltriethoxysilane, 3-mercaptopropylmethyldiethoxysilane, 2-mercaptoethyltripropoxysilane, 18-mercaptooctadecyldiethoxychlorosilane, and mixtures thereof.

Examples of blocked mercapto silanes include 2-triethoxysilyl-1-ethylthioacetate, 2-trimethoxysilyl-1-ethylthioacetate, 2-(methyldimethoxysilyl)-1-ethylthioacetate, 3-trimethoxysilyl-1-propylthioacetate, triethoxysilylmethyl-thioacetate, trimethoxysilylmethylthioacetate, triisopropoxysilylmethylthioacetate, methyldiethoxysilylmethylthioacetate, methyldimethoxysilylmethylthioacetate, methyldiisopropoxysilylmethylthioacetate, dimethylethoxysilylmethylthioacetate, dimethylmethoxysilylmethylthioacetate, dimethylisopropoxysilylmethylthioacetate, 2-triisopropoxysilyl-1-ethylthioacetate, 2-(methyldiethoxysilyl)-1-ethylthioacetate, 2-(methyldiisopropoxysilyl)-1-ethylthioacetate, 2-(dimethylethoxysilyl-1-ethylthioacetate, 2-(dimethylmethoxysilyl)-1-ethylthioacetate, 2-(dimethylisopropoxysilyl)-1-ethylthioacetate, 3-triethoxysilyl-1-propylthioacetate, 3-triisopropoxysilyl-1-propylthioacetate, 3-methyldiethoxysilyl-1-propyl-thioacetate, 3-methyldimethoxysilyl-1-propylthioacetate, 3-methyldiisopropoxysilyl-1-propylthioacetate, 1-(2-triethoxysilyl-1-ethyl)-4-thioacetylcyclohexane, 1-(2-triethoxysilyl-1-ethyl)-3-thioacetylcyclohexane, 2-triethoxysilyl-5-thioacetylnorbornene, 2-triethoxysilyl-4-thioacetylnorbornene, 2-(2-triethoxysilyl-1-ethyl)-5-thioacetylnorbornene, 2-(2-triethoxy-silyl-1-ethyl)-4-thioacetylnorbornene, 1-(1-oxo-2-thia-5-triethoxysilylphenyl)benzoic acid, 6-triethoxysilyl-1-hexylthioacetate, 1-triethoxysilyl-5-hexylthioacetate, 8-triethoxysilyl-1-octylthioacetate, 1-triethoxysilyl-7-octylthioacetate, 6-triethoxysilyl-1-hexylthioacetate, 1-triethoxysilyl-5-octylthioacetate, 8-trimethoxysilyl-1-octylthioacetate, 1-trimethoxysilyl-7-octylthioacetate, 10-triethoxysilyl-1-decylthioacetate, 1-triethoxysilyl-9-decylthioacetate, 1-triethoxysilyl-2-butylthioacetate, 1-triethoxysilyl-3-butylthioacetate, 1-triethoxysilyl-3-methyl-2-butylthioacetate, 1-triethoxysilyl-3-methyl-3-butylthioacetate, 3-trimethoxysilyl-1-propylthiooctanoate, 3-triethoxysilyl-1-propyl-1-propylthiopalmitate, 3-triethoxysilyl-1-propylthiooctanoate, 3-triethoxysilyl-1-propylthiobenzoate, 3-triethoxysilyl-1-propylthio-2-ethylhexanoate, 3-methyldiacetoxysilyl-1-propylthioacetate, 3-triacetoxysilyl-1-propylthioacetate, 2-methyldiacetoxysilyl-1-ethylthioacetate, 2-triacetoxysilyl-1-ethylthioacetate, 1-methyldiacetoxysilyl-1-ethylthioacetate, 1-triacetoxysilyl-1-ethyl-thioacetate, tris-(3-triethoxysilyl-1-propyl)trithiophosphate, bis-(3-triethoxysilyl-1-propyl)methyldithiophosphonate, bis-(3-triethoxysilyl-1-propyl)ethyldithiophosphonate, 3-triethoxysilyl-1-propyldimethylthiophosphinate, 3-triethoxysilyl-1-propyldiethylthiophosphinate, tris-(3-triethoxysilyl-1-propyl)tetrathiophosphate, bis-(3-triethoxysilyl-1-propyl)methyltrithiophosphonate, bis-(3-triethoxysilyl-1-propyl)ethyltrithiophosphonate, 3-triethoxysilyl-1-propyldimethyldithiophosphinate, 3-triethoxysilyl-1-propyldiethyldithiophosphinate, tris-(3-methyldimethoxysilyl-1-propyl)trithiophosphate, bis-(3-methyldimethoxysilyl-1-propyl)methyldithiophosphonate, bis-(3-methyldimethoxysilyl-1-propyl)-ethyldithiophosphonate, 3-methyldimethoxysilyl-1-propyldimethylthiophosphinate, 3-methyldimethoxysilyl-1-propyldiethylthiophosphinate, 3-triethoxysilyl-1-propylmethylthiosulfate, 3-triethoxysilyl-1-propylmethanethiosulfonate, 3-triethoxysilyl-1-propylethanethiosulfonate, 3-triethoxysilyl-1-propylbenzenethiosulfonate, 3-triethoxysilyl-1-propyltoluenethiosulfonate, 3-triethoxysilyl-1-propylnaphthalenethiosulfonate, 3-triethoxysilyl-1-propylxylenethiosulfonate, triethoxysilylmethylmethylthiosulfate, triethoxysilylmethylmethanethiosulfonate, triethoxysilylmethylethanethiosulfonate, triethoxysilylmethylbenzenethiosulfonate, triethoxysilylmethyltoluenethiosulfonate, triethoxysilylmethylnaphthalenethiosulfonate, triethoxysilylmethylxylenethiosulfonate, and the like. Mixtures of various blocked mercapto silanes can be used.

One example of a suitable blocked mercapto silane is NXT^{™} silane (3-octanoylthio-1-propyltriethoxysilane), commercially available from Momentive Performance Materials Inc., Albany, N.Y.

In one embodiment, the organosilane is supported on a substrate, such as carbon black. For example, bis-[3-(triethoxysilyl)propyl] Tetrasulfide (TESPT) is obtainable supported on ASTM grade N330 carbon black.

In another embodiment, the organosilane coupling agent is added to the rubber composition in the form of a pre-treated silica. The pre-treated silica can be one that has been pre-surface treated with an organosilane prior to being added to the rubber composition. The use of a pre-treated silica can allow for two ingredients (i.e., silica and a silica coupling agent) to be added as one ingredient, which generally tends to make rubber compounding easier and may also reduce the amount of organosilane coupling agent needed.

In another embodiment, the organosilane coupling agent is separately added to the rubber composition.

### Resins

The exemplary rubber composition includes at least one hydrocarbon resin as traction resin. The hydrocarbon traction resin may be present in the rubber composition in a total amount of at least 1 phr, or at least 1.5 phr, or up to 8 phr, or up to 4 phr, or up to 3 phr.

The hydrocarbon resin(s) may have a glass transition temperature Tg which is greater than 20° C, or at least 30°C, or up to 50°C, as determined according to ASTM D6604. The resin may have a softening point of at least 30°C, or at least 70° C, or up to 100°C, as determined according to ASTM E28. The Tg is generally lower than its softening point, and the lower the Tg the lower the softening point. The resin helps to improve the wet traction of a tire, which can be estimated from tan δ values at 0°C.

In one embodiment, the resin is partially or fully hydrogenated.

In one embodiment, the hydrocarbon resin is functionalized.

In one embodiment, the hydrocarbon resin is a hydrocarbon resin or blend of such resins which is optionally functionalized and/or hydrogenated.

The hydrocarbon resin may be selected from terpene-phenol resins, terpene resins, terpene-styrene resins, alpha-methylstyrene resins, styrene/alpha-methylstyrene resins, coumarone-indene resins, polydicyclopentadiene (DCPD) resins, DCPD/C9 resins, hydrogenated DCPD resins (H2DCPD), H2DCPD/C9 resins, C5 resins, C9 resins, H2C5 resins, H2C9 resins, C5/C9 resins, and copolymers and mixtures thereof (H2 indicates that the resin is hydrogenated, C5 and C9 indicate the number of carbon atoms, prior to any functionalization, in the monomers from which the resins are formed).

An exemplary coumarone-indene resin has a backbone (main chain) containing units derived from coumarone and indene monomers. Monomers other than coumarone and indene, which may be incorporated into the backbone, may include, for example, methyl coumarone, styrene, alpha-methylstyrene, methylindene, vinyltoluene, cyclopentadiene, dicyclopentadiene, and diolefins, such as isoprene and piperylene. Coumarone-indene resins may have a softening point ranging from 10° C to 160° C, or at least 30°C, or up to 100°C, as measured by the ball- and-ring method (ASTM E28).

Petroleum-based resins suitable as traction resins include both aromatic and nonaromatic resins. Examples of aromatic resins include aromatic homopolymer resins and aromatic copolymer resins. An aromatic copolymer resin refers to a hydrocarbon resin which includes a combination of one or more aromatic monomers in combination with one or more other (nonaromatic) monomers, with the majority by weight of all monomers generally being aromatic. Aromatic resins may have a Mw of at least 1000 grams/mole and/or up to 4000 grams/mole.

Several types of petroleum-derived resins are available. Some resins have a low degree of unsaturation and high aromatic content, whereas some are highly unsaturated and yet some contain no aromatic structure at all. Differences in the resins are largely due to the olefins in the feedstock from which the resins are derived. Example olefins include C5, C9, and dicyclopentadiene (DCPD), and combinations thereof. C5 resins are derived from aliphatic monomers containing an average of five carbon atoms, such as one or more of cyclopentene, 1,3-pentadiene (e.g., cis or trans), 2-methyl-2-butene, cyclopentadiene, dicyclopentadiene, diolefins such as isoprene and piperylene. C9 resins are derived from aromatic olefins containing an average of 9 carbon atoms, such as one or more of vinyl toluene, methylstyrene, such as alpha-methylstyrene, indene, and methylindene. Resins may also be formed from mixtures of the C5 and C9 monomers mentioned above, and are therefore known as C5/C9 copolymer resins. Petroleum resins of this type are available with softening points ranging from 10° C to 120° C, or at least 30°C, or at least 70°C, or up to 100° C.

Polydicyclopentadiene is a highly reactive thermoplastic resin formed by a Diels-Alder addition reaction of two cyclopentadiene molecules yielding two stereo-isomers: endo-DCPD and exo-DCPD. DCPD readily copolymerizes with many vinyl monomers and resins including alkyds, unsaturated esters, phenolics and epoxies. It also functions as a reactive diluent, cross-linking agent, and curative.

Examples of alkyl-phenol resins include alkylphenol-acetylene resins such as p-tertbutylphenol-acetylene resins, alkylphenol-formaldehyde resins (such as those having a low degree of polymerization). Vinyl aromatic resins may include one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinylnaphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinylaromatic/aliphatic copolymer resins (e.g., CPD/styrene copolymer resin, and DCPD/styrene copolymer resin).

In the case of an aromatic resin based upon one or more of the above-mentioned vinyl aromatic monomers (e.g., styrene, alpha-methylstyrene), at least 80% by weight, or at least 85% by weight, or at least 90% by weight, or at least 95% by weight, or up to 100% by weight of the monomers in the aromatic resin may be aromatic monomers.

Terpene resins include polymers of at least one of alpha-pinene, beta-pinene, limonene (e.g., L-limonene, D-limonene, and dipentene, which is a racemic mixture of L- and D-isomers), beta-phellandrene, delta-3-carene, delta-2-carene, and combinations thereof. Terpene-phenol resins may be derived by copolymerization of phenolic monomers with terpenes, such as limonenes, pinenes and delta-3-carene.

In one embodiment, the hydrocarbon resin includes a combination of aromatic and aliphatic/cycloaliphatic hydrocarbons. In such cases, the total amount of any aliphatic and/or cycloaliphatic resin used in combination with the aromatic resin may be no more than 3 phr, or less than 2 phr, or more than 20% by weight, or no more than 15% or no more than 10% by weight of the overall amount of hydrocarbon resins).

A C9 modified resin is a resin (such as a C5 resin) which has been modified or functionalized with one or more aromatic monomers, which may be selected from indene, methylindene, vinyl toluene, styrene and methylstyrene (such as alpha-methylstyrene). Hydrogenated DCPD-C9 Copolymer Resins are thermoplastic resins obtained from the copolymerization and hydrogenation of a C5 aliphatic olefin and a C9 aromatic olefin generated in the thermal-cracking process of naphtha.

An exemplary styrene/alpha-methylstyrene resin is a relatively short chain copolymer of styrene and alpha-methylstyrene with a styrene/alpha-methylstyrene molar ratio in a range of 0.05 to 1.50. Such a resin can be prepared by cationic copolymerization of styrene and alpha-methylstyrene in a hydrocarbon solvent.

Example alpha-methylstyrene (AMS) resins are available as SYLVATRAXX^{™} 4401 and SYLVATRAXX^{™} 4412 from Kraton Corp. An example HDCPD/C9 resin is available as OPPERA^{™} PR 383 from ExxonMobil. This resin has an aromatic hydrogen content of about 10 mole %, an aliphatic hydrogen content of about 89 mole %; a softening point (ring and ball method), of about 103°C; a Tg of 55°C; an Mn of 480 g/mol; and an Mw of 770 g/mol. Other suitable OPPERA^{™} resins include PR100A, PR100N, PR120, PR140, OPPERA^{™} PR373, and PR395, An example terpene-phenol resin, 4,6,6-trimethylbicyclo[3.1.1]hept-3-ene phenol, is available as YS POLSTER T160^{™}, from Yasuhara Chemical.

Additional hydrocarbon-based resins are described in U.S. Pub. No. 20210032442 A1.

Resins may also be derived from naturally-occurring rosins and derivatives thereof, including, for example, gum rosin, wood rosin, and tall oil rosin. Gum rosin, wood rosin, and tall oil rosin have similar compositions, although the amount of components of the rosins may vary. Such resins may be dimerized, polymerized or disproportionated. Such resins may be in the form of esters of rosin acids and polyols such as pentaerythritol or glycol.

Other example resins which may be used in the rubber composition in addition to the traction resin include tackifying resins, such as unreactive phenol formaldehyde, and stiffness resins, such as reactive phenol formaldehyde resins and resorcinol or resorcinol and hexamethylene tetramine, which may be used at 1 to 10 phr, with a minimum tackifier resin, if used, being 1 phr and a minimum stiffener resin, if used, being 3 phr. Other resins include benzoxazine resins, as described in U.S. Pub. No. 20220195153A1 to Papakonstantopoulos, et al., which may be used at, e.g., from 2 phr to 10 phr.

### Processing aids

Processing aids, specifically waxes and liquid plasticizers, such as oils, may be used at a total of 1 to 10 phr, or at least 1.5 phr, or up to 5 phr, or up to 4 phr, or up to 3 phr, or up to 2 phr. In one embodiment, the traction resin takes the place of an oil and the oil is present in only small amounts, e.g., 1 phr or less, or is omitted entirely.

### Waxes

Suitable waxes include paraffin waxes and microcrystalline waxes, which may be of the type described in The Vanderbilt Rubber Handbook (1978), pp. 346 and 347. Such waxes can serve as antiozonants.

The wax(es) may be present at 0.1 phr or more, such as at least 0.3 phr, or at least 0.5 phr, or up to 5 phr, or up to 3 phr, or up to 2.5 phr.

### Liquid Plasticizers (including Oils and Non-Oils)

The term liquid plasticizer is used to refer to plasticizer ingredients which are liquid at room temperature (i.e., liquid at 25°C and above). Hydrocarbon resins, in contrast to liquid plasticizers, are generally solid at room temperature. Generally, liquid plasticizers will have a Tg that is below 0°C, generally well below, such as less than -30°C, or less than -40°C, or less than -50°C, such as a Tg of 0°C to -100°C.

When present, the rubber composition may include at least 1 phr of liquid plasticizer, or up to 5 phr, or up to 3 phr, or up to 2 phr. In other embodiments, the rubber composition includes or no more than 0.5 phr, or no more than 0.1 phr of liquid plasticizer. In one embodiment, the rubber composition is free of liquid plasticizer.

Suitable liquid plasticizers include oils (e.g., petroleum oils as well as plant-sourced oils) and non-oil liquid plasticizers, such as ether plasticizers, ester plasticizers, phosphate plasticizers, and sulfonate plasticizers. Liquid plasticizer may be added during the compounding process or later, as an extender oil (which is used to extend a rubber). The Tg of the oil or oils used may be -40°C to -100°C.

Suitable oils may include aromatic, paraffinic, naphthenic, vegetable oils, and low polycyclic aromatic (PCA) oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of vegetable oils that can be used include soybean oil, sunflower oil, canola (rapeseed) oil, corn oil, coconut oil, cottonseed oil, olive oil, palm oil, peanut oil, and safflower oil. Soybean oil and corn oil are typically preferred vegetable oils.

### Cure Package

The cure package includes a) a vulcanizing (cure) agent, and b) optionally at least one of: a cure accelerator, a cure activator, and a cure inhibitor. The cure package may be used in the rubber composition at 0.5 to 20 phr, or at least 5 phr, or up to 10 phr.

### Vulcanizing (Cure) Agent

The vulcanization of the rubber composition is conducted in the presence of a vulcanizing agent, such as a sulfur-based vulcanizing agent.

Examples of suitable sulfur-based vulcanizing agents include elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

Sulfur vulcanizing agents, expressed in terms of the weight of sulfur, may be used in an amount of at least 0.1 phr, such as at least 0.4 phr, or at least 0.7 phr, or at least 1 phr, or up to 7 phr, or up to 2 phr, or up to 1.2 phr.

### Cure Accelerators, including Ultra Accelerators

Cure accelerators and activators act as catalysts for the vulcanization agent. Accelerators are used to control the time and/or temperature required for vulcanization and to improve the properties of the vulcanizate. The total amount of the cure accelerator(s) may be from 0.1 to 5 phr, or at least 0.5 phr, or at least 1 phr, or at least 1.2 phr, or at least 1.5 phr, or up to 4 phr, or up to 3 phr, or up to 2 phr, or up to 1.7 phr.

The exemplary accelerator includes a primary accelerator, optionally a secondary accelerator, and an ultra-accelerator. A primary accelerator may be used in amounts ranging from 0.5 to 4 phr. When combined with a secondary accelerator, the primary accelerator is generally used in the larger amount (e.g., 0.5 to 3 phr), and the secondary accelerator is generally used in smaller amounts (e.g., 0.05 to 0.50 phr), in order to activate and to improve the properties of the vulcanizate. Combinations of such accelerators have historically been known to produce a synergistic effect of the final properties of sulfur-cured rubbers and are often somewhat better than those produced by use of either accelerator alone. In addition, delayed action accelerators may be used which are less affected by normal processing temperatures but produce satisfactory cures at ordinary vulcanization temperatures.

Representative examples of accelerators include amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine compound, although a second sulfenamide accelerator may be used.

Examples of thiazole cure accelerators include 2-mercaptobenzothiazole, 2,2'-dithiobis(benzothiazole) (MBTS). Guanidine cure accelerators include diphenyl guanidine (DPG). Examples of sulfenamide cure accelerators include benzothiazolesulfenamides, such as N-cyclohexyl-2-benzothiazolesulfenamide (CBS), and N-tert-butyl-2-benzothiazolesulfenamide (TBBS).

Cure accelerators having a relatively fast vulcanization initiation time, referred to as "t0," of less than 3 minutes, are referred to as ultra-accelerators.

The ultra-accelerator may contain a thiuram, dithiocarbamate, and/or xanthate functionality. These accelerators begin the curing process more quickly than other accelerators, creating shorter crosslinks which are desirable for the present application. They can be used in place of a conventional secondary accelerator. They also serve as anti-reversion aids, protecting the polymer matrix of a formed tire tread, particularly when it becomes hot. This helps to reduce chipping and chunking, in which small pieces of the tire break off.

Example ultra-accelerators include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc dibenzyl dithiocarbamate (ZBED), zinc diisononyl dithiocarbamate, zinc pentamethylene dithiocarbamate, zinc dibenzyldithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and mixtures thereof.

One ultra-accelerator which also provides the tire tread with improved abrasion resistance and a more stable cure is 1,6-bis(N,N'-dibenzylthiocarbamoyldithio)hexane (BDBZTH). Other useful ultra-accelerators are zinc dibenzyl dithiocarbamate (ZBED) and tetrabenzyl thiuram disulfide (TBzTD).

The rubber composition may include at least 0.1 phr of the ultra-accelerator, or at least 0.2 phr, or up to 1 phr, or up to 0.5 phr.

Combinations of an ultra-accelerator, such as BDBZTH, with one or more slower acting accelerators may also be used, such as a a sulfenamide and/or or guanidine cure accelerator. A ratio by weight of the other accelerator(s) (such as a sulfenamide, guanidine, and/or benzothiazole accelerator) to the ultra-accelerator(s) may be at least 3:1 or at least 3.5:1 or at least 4:1, or up to 6:1, or up to 5:1.

### Cure Activator

Cure activators are additives which are used to support vulcanization. Cure activators include both inorganic and organic cure activators. Zinc oxide is the most widely used inorganic cure activator and may be present at 1 phr to 6 phr, e.g., at least 2 phr, or up to 5 phr.

Organic cure activators include fatty acids, such as stearic acid, palmitic acid, lauric acid, calcium and zinc salts of unsaturated fatty acids, amides of unsaturated fatty acids, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea.

The total amount of organic cure activator(s) may be from 0.1 to 5 phr, such as at least 0.5 phr, or at least 1 phr, or up to 4 phr.

### Cure Retardants

Cure retardants are used to control the vulcanization process and generally retard or inhibit vulcanization until the desired time and/or temperature is reached. Example cure retardants include N-(cyclohexylthio)phthalimide.

The amount of cure retardant, if used, may be 0.1 to 2 phr, or at least 0.2 phr, or up to 1 phr, or up to 0.5 phr.

### Antioxidants, Antidegradants and Antiozonants

Various compounds may be incorporated in the rubber composition which help to reduce oxidation, ozone degradation, and other forms of degradation. In total these compounds may be present in the rubber composition at 1 phr or more, such as at least 2 phr, or at least 3 phr, or up to 6 phr, or up to 5 phr. In other embodiments, they may be absent.

Exemplary antioxidants suited to use in the rubber composition include amine based antioxidants, such as paraphenylenediamines (PPDs) including diaryl-paraphenylene diamines, e.g., N-(1,3-dimethylbutyl)-N'-phenyl-p-phenylenediamine (6PPD), para-phenylenediamine, and others, such as those disclosed in The Vanderbilt Rubber Handbook (1978), pages 344-346. Such antioxidants may also serve as antiozonants and may be used at from 0.1 to 6 phr, such as at least 0.3 phr, or at least 1 phr, or at least 2 phr. In some embodiments, at least a portion of the antioxidant is provided in the one or more of the elastomers.

Antidegradants, where used, may include amine based antidegradants and phenol-containing antidegradants, and may be used at from 1 to 5 phr. Phenol-containing antidegradants include polymeric hindered phenol antioxidants, and others, such as those included in The Vanderbilt Rubber Handbook (1978), pages 344-347. Examples include trimethyl-dihydroquinoline (TMQ) antidegradants, which are based on polymerized aniline-acetone condensation products. Such antidegradants may be used at from 0.1 to 6 phr, such as at least 0.3 phr, or at least 0.5 phr.

In addition to the above ingredients, the rubber composition may include other rubber compounding ingredients, such as a peptizer, such as pentachlorothiophenol, dibenzamidodiphenyl disulfide, or a mixture thereof. Typical amounts of peptizer, if used, may be 0.1 phr to 1 phr.

### Preparation of the Rubber Composition

Rubber compositions may be prepared by mixing the vulcanizable elastomers, the silica and carbon black, and other rubber compounding ingredients, not including the cure agent, in at least one sequential mixing stage with at least one mechanical mixer, usually referred to as a "non-productive" mixing stage, or stage(s), to an elevated temperature under high shear rubber mixing conditions, followed by a final "productive" mixing stage, in which a sulfur-based cure package, such as a sulfur-based cure agent and cure accelerators, is added to the mixture and mixed at a lower mixing temperature to avoid unnecessarily pre-curing the rubber mixture during the productive mixing stage. The ingredients may be mixed in the non-productive mixing stage(s) for 2 minutes to a temperature of temperature of 130°C to 200°C, e.g., about 145°C. Once the cure package is added (or at least the curing agent), the subsequent productive mixing step may be conducted at a temperature below the vulcanization (cure) temperature and/or for a short time, in order to avoid unwanted pre-cure of the rubber composition, e.g., no more than 120°C, such as at least 40°C, or at least 60°C, e.g., for 2 minutes at a temperature of 110-115°C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill, and allowed to cool to below 40°C after each mixing step.

When the cure package is thoroughly mixed, the rubber composition may be molded or otherwise formed into the shape of a green component of a tire, such as a tire tread. The temperature of the green component may be raised to effect cure. Curing of the pneumatic tire or a part thereof may be carried out at a temperature of from 120°C to 200°C, e.g., at least 140°C, or up to 180°C, or about 150°C, for at least 10 minutes. Any of the usual vulcanization processes may be used, such as heating in a press or mold, or heating with superheated steam or hot air. Such tires can be built, shaped, molded and cured by various methods which are known and will be readily apparent to those having skill in such art.

The use of silica fillers may optionally necessitate a separate re-mill stage for separate addition of a portion or all of such filler. This stage often is performed at temperatures similar to, although often slightly lower than, those employed in the other productive mixing stages, e.g., ramping from 90°C to 150°C.

In one embodiment, a tire is provided, the tire having a tread which is formed, at least in part, from the exemplary rubber composition. Other parts of the tire, such as the tire sidewalls, may additionally, or alternatively, be formed, at least in part, from a rubber composition as described herein. The tire may be a pneumatic tire for an on-the-road vehicle, such as a bus or truck, or an automobile, or a tire for an off-road vehicle, airplane or the like. The tire tread may have a tread depth of at least 20 mm, e.g., at least 22 mm, such as up to 28 mm, or up to 27 mm, which is suitable for use in a truck.

The rubber composition is not limited to use in tires but may find application in rubber gloves, surgical instruments, and the like.

### Example Compositions

Table 1 illustrates exemplary rubber compositions in accordance with aspects of the exemplary embodiment.

**TABLE 1: Example Rubber Compositions**

| Component | Example 1 (phr) | Example 2 (phr) |
|---|---|---|
| Polyisoprene, e.g., Natural Rubber | 50-80 | 60-75 |
| Polydiene, e.g., Polybutadiene | 20-50 | 25-40 |
| Carbon Black (from all sources) | 15-45 | 30-40 |
| Silica | 20-40 | 24-35 |
| Organosilane coupling agent | 1-7 | 2-5 |
| Traction Resin | 1-6 | 1.5-4 |
| Wax (Paraffin wax and/or microcrystalline wax) | 0.5-3 | 1-2.5 |
| Antidegradants, antiozonants, and antioxidants | 2-6 | 3-5 |
| Organic cure activator, e.g., a mixture of fatty acid and/or fatty acid soaps | 1-6 | 2-5 |
| Inorganic cure activator, e.g., Zinc Oxide | 1.0-7.0 | 2.0-4.0 |
| Sulfenamide cure accelerator, e.g., N-cyclohexyl-2-benzothiazolesulfenamide (CBS) or N-tert-butyl-2-benzothiazole-sulfenamide (TBBS) | 0.5-2.0 | 0.8-1.5 |
| Ultra-accelerator/anti-reversion aid, e.g., 1,6-bis-N,N(dibenzylthiocarbamoyldithio)-hexane (BDBZTH), Zinc dibenzyl dithiocarbamate (ZBED), and/or tetrabenzylthiuram disulfide (TBzTD) | 0.1-1.0 | 0.2-0.7 |
| Sulfur-based curing agent, e.g., elemental sulfur | 0.3-1.2 | 0.5-1.0 |

As an example, a rubber composition is formed with a cure package targeting lower and shorter crosslink density (for better TW/RR balance and tear) and an anti-reversion agent (for better stability/aging and heat build-up), in a polymer matrix of high natural rubber content, filled with both silica and carbon black, with addition of a traction resin for the compound properties. More specifically, the natural rubber/synthetic rubber ratio by weight is from 100/0 to 60/40, the CTAB surface area of the silica ranges from 150 to 200 m²/g, a ratio of silica to elastomers by weight is from 20/100 to 40/100. The traction resin may be a hydrocarbon traction resin and/or a functionalized hydrocarbon resin, or a blend thereof. The resin may be selected from a terpene-phenol resin, a terpene-styrene resin, and/or one or more of DCPD, DCPD/C9, H2DCPD, H2DCPD/C9, C5, C9, H2C5, H2C9, C5/C9 resins, and mixtures thereof.

### Tire Tread Properties

The use of the rubber composition in tires, such as tire treads, may result in a tire having improved or desirable tread properties. These improved or desirable properties may include reduced rolling resistance, reduced treadwear, good wet handling, and improved abrasion resistance.

The following examples illustrate preparation of the exemplary rubber compositions and properties thereof.

### EXAMPLES

Rubber compositions (Examples A-E) are prepared using the formulations shown in Table 2. Examples A and E are formulated to be used in tire treads for buses, such as on electric buses used in urban areas. Examples B, C, and D are formulated to be used in tire treads for long-haul trucks, where the vehicles are used primarily for highway driving.

The formulations are mixed in a laboratory mixer. Prototype tires are built using a tread formed from the rubber compositions to demonstrate the benefits in terms of physical properties and tire performance, as compared with three reference formulations (REF. 1, a formulation for buses, and REFS. 2 and 3, formulations for long-haul trucks).

**TABLE 2: Rubber Compositions (in phr)**

| Ingredient | REF. 1 | REF. 2 | REF. 3 | EX. A | EX. B | EX. C | EX. D | EX. E |
|---|---|---|---|---|---|---|---|---|
| Natural Rubber ¹ | 80.0 | 65.0 | 63 | 70.0 | 70.0 | 70.0 | 70.0 | 70.0 |
| Polybutadiene ² | 10.0 | 35.0 | 23 | 30.0 | 30.0 | 30.0 | 30.0 | 30.0 |
| SBR ³ | 10.0 | - | 14 | - | - | - | - | - |
| Carbon Black ⁴ | 32.0 | 55 | 56 | 35.4 | 35.4 | 33.0 | 33.0 | 35.4 |
| Silica ⁵ | 28.0 | - | - | 28.0 | 28.0 | 28.0 | 25.0 | 28.0 |
| Organosilane coupling agent on carbon black ⁶ | 7.0 | - | - | 7.0 | 7.0 | 7.0 | 7.0 | 7.0 |
| Processing Oil ⁷ | 2.0 | - | 4.0 | - | - | - | - | - |
| Hydrocarbon traction resin ⁸ | - | - | - | 2.0 | 2.0 | 2.0 | 2.0 | 2.0 |
| Cure activator/ release aid ⁹ | 1.0 | - | - | 1.0 | 1.0 | 1.0 | - | 1.0 |
| Cure Activator¹⁰ | 3.0 | 2.5 | 2.0 | 3.0 | 3.0 | 3.0 | 3.0 | 3.0 |
| Wax ¹¹ | 2.7 | 1.5 | 1.0 | 2.0 | 2.0 | 1.5 | 1.5 | 2.0 |
| Antioxidant ¹² | 0.75 | 0.75 | 0.75 | 0.75 | 0.75 | - | - | 0.75 |
| Antidegradant ¹³ | 1.0 | 1.0 | 0.5 | 1.0 | 1.0 | 1.0 | 1.0 | 1.0 |
| Antiozonant and antioxidant ¹⁴ | 2.25 | 1.25 | 1.5 | 2.25 | 2.25 | 2.25 | 2.25 | 2.25 |
| Zinc Oxide | 3.0 | 3.0 | 3.0 | 3.0 | 3.0 | 3.0 | 3.0 | 3.0 |
| Sulfur-based curing agent ¹⁵ | 1.00 | 1.25 | 1.0 | 0.8 | 0.8 | 0.85 | 0.9 | 0.9 |
| Sulfenamide cure accelerator ¹⁶ | 2.00 | 1.11 | 1.8 | 1.3 | 1.3 | 1.3 | 1.17 | 1.17 |
| Ultra-accelerator ¹⁷ | - | - | - | 0.3 | 0.3 | 0.3 | 0.25 | 0.25 |
| TOTAL PHR | 185.7 0 | 167.3 6 | 171.5 5 | 187.8 | 187.8 | 184.4 | 180.0 7 | 187.8 2 |

| | | | | | | | | |
|---|---|---|---|---|---|---|---|---|
| ¹ REFS 1 and 2 use Technically Specified or Block Rubber (TSR), REF. 3 and Examples A to E use Ribbed Smoked Sheets (RSS). ² All examples use a high cis-1,4-polybutadiene rubber with a cis-1,4 content of at least 96%, prepared by catalysis of 1,3-butadiene monomer, for REF. 1 the PBD is obtained as BUDENE^{®} 1207 from The Goodyear Tire & Rubber Company (nickel catalyzed), having an onset Tg of about -109 °C and a Mooney viscosity of 55; for REF. 2, the PBD is obtained as BUDENE^{®} 1208 from The Goodyear Tire & Rubber Company (nickel catalyzed), having an onset Tg of -109°C and a Mooney viscosity of about 46; for Ex. A-D, the PBD is obtained as BUDENE^{®} 1223 from The Goodyear Tire & Rubber Company (neodymium catalyzed), having an onset Tg of about -110° C and a Mooney viscosity of 55; and REF. 3 and Ex. E use BUNA^{®} CB 25 from Arlanxeo (neodymium catalyzed), having a Mooney viscosity of about 44. ³ REF. 1 uses an emulsion polymerized copolymer of butadiene and styrene (ESBR), which is free of nitrosamines and nitrosamine generating ingredients. The ESBR is produced by cold emulsion polymerization at 10 °C or lower, emulsified by a mixture of soaps of organic acids, and stabilized with a non-staining antioxidant, obtained as PLIOFLEX^{®} 1502 from The Goodyear Tire & Rubber Company; REF. 3 uses a solution polymerized styrene-butadiene rubber, with a styrene content of 18% and 1,2-vinyl content of 10%, Tg = -78 °C, having 2.9 percent of the total quantity of repeat units derived from styrene in blocks containing five or more styrene repeat units, obtained as SLF^{®}18B10 from The Goodyear Tire & Rubber Company. ⁴ASTM grade N121 carbon black. Note-the total carbon black additionally includes about 3.5 phr carbon black used to support the organosilane coupling agent. ⁵ Silica having a BET nitrogen surface area of about 165 m²/g and a CTAB surface area of about 160 m²/g, obtained as Zeosil^{™} 1165 from Solvay. ⁶ Approximately equal mixture, by weight, of Bis-[3-(triethoxysilyl)propyl] Tetrasulfide (TESPT) and ASTM grade N330 carbon black, i.e., about 3.5 phr of the silane coupling agent, obtained as Si69 from Evonik Industries. ⁷ Naphthenic oil. ⁸ Refs 1 and 2 use no traction resin; Ex. A uses a terpene-phenol traction resin, 4,6,6-trimethylbicyclo[3.1.1]hept-3-ene phenol, obtained as YS POLSTER T160^{™}, from Yasuhara Chemical; Ex. B, C, and D use an alpha-methylstyrene (AMS) traction resin obtained as SYLVATRAXX^{™} 4401 from Kraton Corp; and Ex. E uses an aromatic modified aliphatic petroleum-based hydrocarbon resin having a softening point of about 90°C, obtained as OPPERA^{™} PR373 from Exxonmobil. ⁹ Mixture of calcium soaps and amides of unsaturated fatty acids, obtained as Struktol^{®} WB 16 from Struktol, which serves as a cure activator and also as a release aid (reduces sticking on mixer, etc.). ¹⁰ Mixture of fatty acids, predominantly stearic acid. ¹¹ Paraffin Wax. ¹² Diaryl-p-phenylene diamine antioxidant. ¹³ Trimethyl-dihydroquinoline (TMQ) antidegradant, based on polymerized aniline-acetone condensation products. ¹⁴ N-(1,3-dimethylbutyl)-N'-phenyl-p-phenylenediamine (6PBD). ¹⁵ Elemental sulfur. ¹⁶ N-cyclohexyl benzothiazole-2-sulfenamide (CBS) for Ref 1 and Ex. A-C, N-tert-butyl-benzothiazolesulfenamide (TBBS) for Ex. D. ¹⁷ Ex. A uses 1,6-bis-N,N(dibenzylthiocarbamoyldithio)hexane (BDBZTH), Ex. B and C use zinc dibenzyldithiocarbamate (ZBED), Ex. D and E use tetrabenzylthiuram disulfide (TBzTD) obtained as PERKACIT^{™} from Performance Additives, Italy. | | | | | | | | |

It may be noted that none of the Exemplary compositions A-E uses any processing oil. In these compositions, the traction resin also serves the function of a processing oil, while avoiding undesirable properties that oils can produce in the cured rubber composition.

### Properties of the Rubber Compositions

Tests were performed on the cured rubber compositions. Results are shown in Table 3.

**TABLE 3: Results for Tests Performed on Cured Rubber Compositions**

| Test | Ref. 1 | Ref. 2 | Ref. 3 | Ex. A | Ex. B | Ex. C | Ex. D | Ex. E |
|---|---|---|---|---|---|---|---|---|
| Stiffness at 1% ^{A} | 2.279 | 2.051 | 2.195 | 2.996 | 2.755 | 2.628 | 2.183 | 2.525 |
| Stiffness at 15% ^{A} | 1.264 | 1.057 | 1.208 | 1.604 | 1.515 | 1.486 | 1.267 | 1.356 |
| Stiffness at 50% ^{A} | 0.874 | 0.738 | 0.875 | 1.062 | 1.014 | 1.010 | 0.900 | 0.925 |
| Hysteresis ^{B} | 0.149 | 0.194 | 0.172 | 0.159 | 0.155 | 0.148 | 0.159 | 0.166 |
| Rebound at 100°C [%] ^{C} | 65.4 | 61.1 | 63 | 66 | 66.0 | 66.8 | 67.0 | 64.7 |
| Rebound at 0°C [%] ^{C} | 33 | 37.0 | 40.4 | 37 | 36.5 | 38.2 | 39.2 | 35.8 |
| Loss modulus, G" ^{D} | 4.49 | 2.58 | 2.35 | 3.92 | 3.23 | 3.30 | 2.42 | 3.630 |
| Shore A Hardness ^{E} | 67 | 66.7 | 66.5 | 74 | 71 | 70.2 | 67.7 | 69.6 |
| Modulus 300% Ring [MPa] ^{F} | 14.5 | 13.8 | 14.5 | 15.3 | 15.7 | 15.4 | 15.0 | 14.5 |
| Elongation at break [%] ^{F} | 741 | 465 | 443 | 470 | 452 | 453 | 459 | 546 |
| Tensile strength [MPa] ^{F} | 21.7 | 21.8 | 21 | 22.6 | 22.3 | 21.9 | 22 | 20.8 |
| Tear strength [N/mm] ^{F} | 24.9 | 23.6 | 19 | 23 | 20.9 | 22.6 | 21 | 24.5 |
| Abrasion, medium severity ^{G} | 709 | | 505 | | | | 482 | |
| Abrasion, high severity ^{G} | 1512 | | 998 | | | | 1035 | |

| | | | | | | | | |
|---|---|---|---|---|---|---|---|---|
| ^{A} Stiffness is determined as G' at 1%, 15%, and 50% strain at 191 °C and 1.67 Hz with an RPA 2000^{™} Rubber Process Analyzer from Alpha Technologies, based on ASTM D5289. ^{B} Hysteresis is determined as tan delta (the ratio of the loss modulus G" to the storage modulus G'), at 10% strain with the RPA2000 ^{™} Rubber Process Analyzer (lower is better). ^{C} Rebound at 0°C and at 100°C is determined on the cured sample with a Zwick Rebound tester, based on ASTM D1054. Rebound at 0°C is an indicator of the wet braking capability of the tire, with lower values generally being better. Rebound at 100°C is an indicator of rolling resistance, with higher values generally being better. ^{D} The loss modulus, G", is measured under a deformation of 6% at -30°C using a Metravib dynamic mechanical analyzer at a frequency of 7.8 Hertz. ^{E} Shore A Hardness is determined at 23°C. ^{F} Tensile properties (Ring Modulus at 300%, Elongation at break, Tensile strength, and Tear strength (average load/width at 23°C) are measured with an Automated Testing System instrument by the Instron Corporation. ^{G} Abrasion, indicative of tread wear, is determined as Grosch abrasion rate in terms of mg/km of rubber abraded away. The test rubber sample is placed at a slip angle (medium or high) under constant load (Newtons) as it traverses a given distance on a rotating abrasive disk. Lower abrasion values at a given slip angle indicate higher expected mileage, particularly for the high slip angle. | | | | | | | | |

From the results, it can be seen that the cured Ex. E composition has higher stiffness and higher rebound at 100 °C, a lower rebound at 0°C, and higher loss modulus than comparative REF. 2, all of which indicate that the composition is better suited to use in treads of tires for buses than the reference.

It can also be seen that the cured Ex. D composition has better rebound properties than REF. 1, which indicates that the composition is better suited to use in treads of tires for long-haul truck applications than the reference. Grosch abrasion is also better for Example D than REF. 1, for both medium and high slip angles.

Tires were formed with treads of some of the rubber compositions and fitted to vehicles as follows:
Tire 1, REF. 1 tread on Long Haul Truck
Tire 2, REF. 2 tread on Urban bus
Tire 3, REF. 3 tread Long Haul Truck
Tire 4, Ex. A tread on Urban bus
Tire 5, Ex. C tire on Long Haul Truck
Tire 6, Ex D tread on Long Haul Truck
Tire 7, Ex. E tread on Urban Bus

The following tests were performed on the tires run on simulated roads to provide comparative values for the following:
Rolling resistance is determined as a function of the wheel load.

Wet performance is evaluated using the Wet Grip Index.

Endurance is evaluated as time to visual damage.

Results are shown in Table 4.

**TABLE 4: Results for Tests Performed on Tires**

| Test | Tire 1 | Tire 2 | Tire 3 | Tire 4 | Tire 5 | Tire 6 | Tire 7 |
|---|---|---|---|---|---|---|---|
| Rolling Resistance (L1) | 6.19 | 6.68 | 6.07 | 6.47 | 5.60 | 5.61 | 6.47 |
| Wet Grip Index | 118.6 | 109.2 | 112.8 | 117.8 | 118.7 | 117.5 | 117.8 |
| Endurance | > 47 h | > 47 h | > 67 h | > 47h | > 67 h | >67 h | > 47h |

The results indicate that Tire 4, with the Ex. A tread, and tire 7, with the Ex. E tread, both have a lower (better) rolling resistance indicator and a higher (better) wet grip index than the Tire 2, REF. 2 Tread on an Urban bus. Tire 5, with the Ex. C tread, and Tire 6, with the Ex. D tread both have a lower (better) rolling resistance indicator than Tire 3, REF. 3 tread in the simulated road tests.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated.

## Claims

1. A vulcanizable rubber composition for use in a tire tread, the rubber composition comprising, expressed by weight per hundred parts of elastomer (phr):
100 phr of an elastomer component, the elastomer component comprising a polyisoprene rubber and a polydiene rubber in a ratio by weight of at least 1:1;
at least 40 phr of a filler component, the filler component comprising carbon black and silica in a ratio, by weight of at least 0.8:1;
at least 1 phr of an organosilane coupling agent;
at least 1 phr of a hydrocarbon resin;
a sulfur-based curing agent; and
a cure accelerator, the cure accelerator comprising an ultra-accelerator.

2. The rubber composition of claim 1, wherein the elastomer component comprises natural rubber and a polybutadiene rubber, the polybutadiene rubber preferably having a cis-1,4 content of at least 95 %, and, optionally, wherein a ratio by weight of the natural rubber to the polybutadiene rubber is at least 60:40.

3. The rubber composition of claim 1 or 2, wherein the ratio by weight of the carbon black to the silica is at least 1:1; and/or wherein the rubber composition comprises 15 to 45 phr of the carbon black and 20 to 40 phr of the silica.

4. The rubber composition of at least one of the previous claims, wherein the rubber composition comprises at least 2 phr of the organosilane coupling agent.

5. The rubber composition of at least one of the previous claims, wherein the hydrocarbon resin is selected from the group consisting of terpene-phenol resins, alpha-methylstyrene resins, aromatic modified aliphatic petroleum-based hydrocarbon resins, and combinations thereof.

6. The rubber composition of at least one of the previous claims, wherein the rubber composition comprises at least 1.5 phr of the hydrocarbon resin; and/or wherein the rubber composition includes no more than 0.5 phr of liquid plasticizer.

7. The rubber composition of at least one of the previous claims, wherein the ultra-accelerator comprises at least one of a thiuram, a dithiocarbamate, and a xanthate functionality.

8. The rubber composition of at least one of the previous claims, wherein the ultra-accelerator is selected from the group consisting of 1,6-bis(N,N'-dibenzylthiocarbamoyldithio)hexane, zinc dibenzyl dithiocarbamate, tetrabenzylthiuram disulfide, and combinations thereof.

9. The rubber composition of at least one of the previous claims, wherein the rubber composition comprises at least 0.1 phr of the ultra-accelerator or from 0.1 phr to 1.0 phr, preferably from 0.15 phr to 0.4 phr, of the ultra-accelerator.

10. The rubber composition of at least one of the previous claims, wherein the accelerator further comprises at least one of a benzothiazole, a sulfenamide, and a guanidine cure accelerator, wherein the sulfenamide cure accelerator, when used, preferably comprises a benzothiazolesulfenamide cure accelerator.

11. The rubber composition of at least one of the previous claims, wherein the rubber composition comprises, in total, at least 0.5 phr of the at least one of the benzothiazole, sulfenamide, and guanidine cure accelerators.

12. The rubber composition of at least one of the previous claims comprising, expressed by weight per hundred parts of elastomer (phr):
100 phr of an elastomer component, the elastomer component comprising natural rubber and a polybutadiene rubber in a ratio by weight of at least 60:40;
at least 40 phr of a filler component, the filler component comprising carbon black and silica in a ratio by weight of from 1:1 to 2:1;
1 to 7 phr of an organosilane coupling agent;
1 to 6 phr of a hydrocarbon resin;
0.5 to 3 phr of a wax; and
a cure package comprising a sulfur-based curing agent, zinc oxide; an organic activator, and a cure accelerator, the cure accelerator comprising 0.1 to 1.0 of an ultra-accelerator and 0.5 to 2 phr of a sulfenamide cure accelerator.

13. A tire tread comprising the rubber composition in accordance with at least one of the previous claims as a vulcanized rubber composition.

14. A tire comprising the tire tread of claim 13.

15. A method of forming a tire tread, the method comprising:
forming a rubber composition, including blending together:
100 phr of an elastomer component, the elastomer component comprising natural rubber and a polybutadiene rubber, a ratio by weight of the natural rubber to polybutadiene rubber being at least 60:40;
at least 40 phr of a filler component, the filler component comprising carbon black and silica, a ratio by weight of the carbon black to the silica being at least 1:1;
at least 1 phr of an organosilane coupling agent;
at least 1 phr of a hydrocarbon resin;
a cure package comprising a sulfur-based curing agent, zinc oxide; optionally, one or more organic activators, and a cure accelerator, the cure accelerator comprising an ultra-accelerator; and
curing the rubber composition to form the tire tread.
